# EUROPÄISCHE PATENTSCHRIFT

(11) **EP 3 061 228 B1**
(45) Veröffentlichungstag und Bekanntmachung des Hinweises auf die Patenterteilung: **24.07.2019**
(21) Anmeldenummer: 14789534.6
(22) Anmeldetag: 02.10.2014
(51) Int. Cl.: H04L 29/08, H04W 8/08, H04W 4/40

(54) **VERFAHREN, VORRICHTUNG, COMPUTERPROGRAMM UND COMPUTERPROGRAMMPRODUKT ZUR ÜBERTRAGUNG VON DATEN ZUR NUTZUNG IN EINEM FAHRZEUG**
METHOD, APPARATUS, COMPUTER PROGRAM AND COMPUTER PROGRAM PRODUCT FOR TRANSMITTING DATA FOR USE IN A VEHICLE
PROCÉDÉ, DISPOSITIF, PROGRAMME INFORMATIQUE ET PRODUIT PROGRAMME INFORMATIQUE POUR LA TRANSMISSION DE DONNÉES DESTINÉES À ÊTRE UTILISÉES DANS UN VÉHICULE

(30) Priorität: 22.10.2013 DE 102013221405; 31.10.2013 DE 102013222173
(43) Veröffentlichungstag der Anmeldung: 31.08.2016
(73) Patentinhaber: Bayerische Motoren Werke Aktiengesellschaft, 80809 München (DE)
(72) Erfinder: HAFNER, Johannes, 85375 Neufahrn (DE)
(86) Internationale Anmeldenummer: PCT/EP2014/071122
(87) Internationale Veröffentlichungsnummer: WO 2015/058941

(56) Entgegenhaltungen:
- WO-A2-01/52198
- DE-A1-102010 002 740
- US-A1- 2006 069 749

## Beschreibung

Die Erfindung betrifft ein Verfahren zur Übertragung von Daten zur Nutzung in einem Fahrzeug. Weiterhin betrifft die Erfindung eine Vorrichtung zum Übertragung von Daten zur Nutzung in einem Fahrzeug. Weiterhin betrifft die Erfindung ein Computerprogramm und ein Computerprogrammprodukt zur Übertragung von Daten zur Nutzung in einem Fahrzeug.

Die Nutzung von beispielsweise digitalen Audio- und/oder Videodaten in einem Fahrzeug wird immer häufiger. Werden diese Daten über eine Mobilfunkverbindung übertragen, so entstehen häufig Kosten.

Aus der WO 01/52198 A2 ist ein gattungsgemäßes Verfahren zur Übertragung und Nutzung von Daten in einem Fahrzeug bekannt, bei dem abhängig von einer Benutzeranforderung die Daten wahlweise von einer ersten Quelle mittels einer Mobilfunkverbindung abrufbar sind, oder, unabhängig von der ersten Quelle, von einer zweiten Quelle abrufbar sind.

Aus der US 2006/069749 A1 ist ein Informations-Ausgabesystem bekannt, bei dem Informationen selektiv danach ausgegeben werden, welche Informations-Empfänger festgestellt werden.

Aus der DE 10 2010 002 740 A1 ist ein Fahrzeugkommunikationssystem bekannt, bei dem Daten, die fahrzeugseitig verfügbar sind und eine niedrige Latenzzeit aufweisen, mittels einer Mobilfunkverbindung an eine Zentralrechnervorrichtung gesandt werden. Fahrzeugseitig verfügbare Daten, die eine hohe Latenzzeit haben, werden von einer fahrzeugseitigen Schnittstelle an eine Datenschnittstelle eines mobilen Endgeräts gesandt.

Die Aufgabe, die der Erfindung zugrunde liegt, ist es, ein Verfahren und eine Vorrichtung zu schaffen, die dazu beitragen, Daten effizient zu übertragen.

Die Aufgabe wird gelöst durch die Merkmale der unabhängigen Patentansprüche. Vorteilhafte Ausgestaltungen sind in den Unteransprüchen gekennzeichnet.

Die Erfindung zeichnet sich aus durch ein Verfahren zur Übertragung von Daten zur Nutzung in einem Fahrzeug. Weiterhin zeichnet sich die Erfindung aus durch eine korrespondierende Vorrichtung. Abhängig von einer Benutzeranforderung zur Übertragung und Wiedergabe von gewünschten Daten von einer ersten Quelle mittels einer Mobilfunkverbindung wird ermittelt, ob die gewünschten Daten auch von einer zweiten Quelle frei von einer Mobilfunkverbindung bereitgestellt werden. Falls die gewünschten Daten auch von einer zweiten Quelle frei von der Mobilfunkverbindung bereitgestellt werden, werden die gewünschten Daten von der zweiten Quelle in dem Fahrzeug empfangen für eine Wiedergabe für einen Benutzer.

Eine Mobilfunkverbindung zeichnet sich insbesondere dadurch aus, dass eine 1:1-Verbindung hergestellt wird. Mit anderen Worten wird über die Mobilfunkverbindung etwas angefordert und anschließend in die andere Richtung übertragen.

Bei einer Mobilfunkverbindung entstehen häufig Übertragungskosten beispielsweise pro übertragenem Megabyte und/oder im Rahmen eines Volumentarifs, in dem eine vorgegebene Menge an Daten für einen vorgegebenen pauschalen Preis übertragen werden können. Da die zweite Quelle frei von der Mobilfunkverbindung ist und insbesondere frei von Datenkosten ist, können die gewünschten Daten gegebenenfalls kostengünstig und/oder insbesondere kostenlos übertragen werden. Somit kann eine sehr kostengünstige Übertragung der gewünschten Daten realisiert werden, für welche sonst Mobilfunkkosten anfallen würden. Weiterhin müssen bei der Mobilfunkverbindung die gewünschten Daten immer explizit angefordert werden. Da die zweite Quelle frei ist von der Mobilfunkverbindung, kann somit eine einfachere und besonders effiziente Datenübertragung erreicht werden.

Gemäß einer vorteilhaften Ausgestaltung umfasst die zweite Quelle eine Rundfunkquelle und/oder einen WLAN-Accesspoint.

Der WLAN-Accesspoint weist insbesondere eine Verbindung zum Internet auf.
Eine Rundfunkverbindung zu einer Rundfunkquelle zeichnet sich insbesondere dadurch aus, dass sie eine 1:n-Verbindung darstellt. Mit anderen Worten überträgt ein Sender an viele Empfänger die gleichen Daten. Es gibt hierbei häufig nur eine Übertragung von dem Sender zum Empfänger und keine Übertragung von dem Empfänger zum Sender, es können also keine einzelnen Daten von dem Sender explizit angefordert werden.

Rundfunk ist sehr häufig kostenlos beziehungsweise nur mit relativ geringen Kosten verbunden, wie zum Beispiel Abo-Gebühren. Somit können hierdurch insbesondere sehr kostengünstige Datenübertragungen realisiert werden. Weiterhin ist gerade mittels Rundfunk eine besonders effiziente Datenübertragung möglich.

Gemäß einer weiteren vorteilhaften Ausgestaltung umfasst die zweite Quelle einen lokalen Datenspeicher des Fahrzeugs.

Hierdurch können die gewünschten Daten sehr schnell und kostenneutral bereitgestellt werden, falls sie auf dem lokalen Datenspeicher gespeichert sind.

Gemäß einer weiteren vorteilhaften Ausgestaltung wird abhängig von einem vorgegebenen Benutzerprofil ermittelt, welche zukünftigen Daten der Benutzer wahrscheinlich in Zukunft anfordern wird. Es wird ermittelt, ob die zukünftigen Daten von einer Rundfunkquelle als Rundfunkdaten bereitgestellt werden. Die von der Rundfunkquelle bereitgestellten Rundfunkdaten werden auf dem lokalen Datenspeicher als gespeicherte Daten gespeichert für eine zukünftige Wiedergabe.

Hierdurch wird eine Wahrscheinlichkeit erhöht, dass die gewünschten Daten in Form von gespeicherten Daten auf dem lokalen Datenspeicher verfügbar sind.

Handelt es sich bei den gewünschten Daten beispielsweise um Audio- und/oder Videodaten, so wird das vorgegebene Benutzerprofil insbesondere ermittelt abhängig von beispielsweise Hör- und/oder Sehgewohnheiten des Benutzers, beispielsweise welches Genre, welchen Künstler und/oder welche Art von Musik der Benutzer häufig abruft. Alternativ oder zusätzlich handelt es sich bei den gewünschten Daten beispielsweise um Daten von Datendiensten, wie beispielsweise Verkehrsdaten, Zusatzdaten wie Albumcover und ähnliche. Die Ermittlung, ob die zukünftigen Daten von der Rundfunkquelle als Rundfunkdaten bereitgestellt werden, kann beispielsweise erfolgen abhängig von Programminformationen, die von der Rundfunkquelle bereitgestellt werden, wie beispielsweise einem sogenannten Electronic Program Guide. Als Electronic Program Guide bezeichnet man elektronisch verbreitete Informationen über ein aktuelles Hörfunk- und/oder Fernsehprogramm. Der Electronic Program Guide wird in der Regel als Zusatzangebot von der Rundfunkquelle ausgestrahlt und ist kostenlos zu empfangen. Alternativ oder zusätzlich kann dies auch mittels der Mobilfunkverbindung mittels Internetdaten ermittelt werden, die beispielsweise eine Information darüber aufweisen, was gerade von welcher Rundfunkquelle gespielt wird. Alternativ oder zusätzlich können mittels der Mobilfunkverbindung Datenbanken der jeweiligen Rundfunkquelle durchsucht werden und/oder Datenbanken von Providern, die einen aktuellen Wiedergabecontent analysieren und katalogisieren. Alternativ oder zusätzlich kann mit Hilfe von einer Frequenzanalyse eines aktuellen ausgestrahlten Contents nach Abgleich mit einer Datenbank der Content identifiziert werden. Die Frequenzanalyse zeichnet sich beispielsweise dadurch aus, dass eine eindeutige Identifikation des jeweiligen Contents beispielsweise anhand von Daten- und/oder Frequenzcharakteristika erfolgt.

Gemäß einer weiteren vorteilhaften Ausgestaltung werden mittels der Mobilfunkverbindung Informationen einer Datenbank abgerufen, die repräsentativ sind für eine Beliebtheit von Daten, die von der ersten Quelle angeboten werden. Abhängig von den abgerufenen Informationen wird ermittelt, welche zukünftigen Daten der Benutzer wahrscheinlich in Zukunft anfordern wird. Es wird ermittelt, ob die zukünftigen Daten von einer Rundfunkquelle als Rundfunkdaten bereitgestellt werden. Die von der Rundfunkquelle bereitgestellten Rundfunkdaten werden auf dem lokalen Datenspeicher als gespeicherte Daten gespeichert für eine zukünftige Wiedergabe.

Hierdurch wird die Wahrscheinlichkeit erhöht, dass die gewünschten Daten als gespeicherte Daten auf dem lokalen Datenspeicher verfügbar sind, insbesondere wenn noch kein Benutzerprofil vorliegt. Derartige Informationen, sind beispielsweise Informationen über Topplatzierungen, wie am häufigsten angefordert, am besten bewertet, am beliebtesten und ähnliche.

Gemäß einer weiteren vorteilhaften Ausgestaltung werden die gespeicherten Daten auf Störungen überprüft. Falls die gespeicherten Daten Störungen aufweisen, werden die Störungen behoben, indem ermittelt wird, ob die gespeicherten Daten von der Rundfunkquelle erneut als Rundfunkdaten bereitgestellt werden. Falls die gespeicherten Daten von der Rundfunkquelle erneut als Rundfunkdaten bereitgestellt werden, werden die von der Rundfunkquelle bereitgestellten Rundfunkdaten auf dem lokalen Datenspeicher erneut als gespeicherte Daten gespeichert.

Mittels Rundfunk aufgezeichnete Daten weisen häufig Störungen auf, wie beispielsweise contentfremde Inhalte, Sprache von Moderatoren, zu früh, beziehungsweise vor Ende eingespielte Werbung, Verkehrsmeldungen und/oder Empfangsstörungen. Indem die Rundfunkdaten erneut empfangen und gespeichert werden, kann die Qualität der gespeicherten Daten erhöht werden.

Gemäß einer weiteren vorteilhaften Ausgestaltung werden die gespeicherten Daten auf Störungen überprüft. Falls die gespeicherten Daten Störungen aufweisen, werden die Störungen behoben, indem ein gestörter Teil der gespeicherten Daten korrigiert wird mit Daten, die hierfür mittels der Mobilfunkverbindung von der ersten Quelle angefordert werden und/oder mittels der Rundfunkquelle empfangen werden.

Die Korrektur von gestörten Stellen mit korrigierten Daten kann insbesondere über Audiokorrelation geschehen. Hierbei werden beispielsweise die gespeicherten Daten und die Daten dekodiert, die hierfür mittels der Mobilfunkverbindung von der ersten Quelle angefordert werden und/oder mittels der Rundfunkquelle empfangen werden, um eine Informations-Sequenz zu gewinnen und hierbei eine erste Dekoder-Sequenz von den gespeicherten Daten erzeugt, sowie eine zweite Dekoder-Sequenz, der angeforderten und/oder empfangenen Daten. Mittels einer Korrelationseinrichtung werden anhand vorgegebener Kriterien die ersten und die zweiten Dekoder-Sequenzen miteinander verglichen und aus den jeweils beiden zeitlich einander entsprechenden ersten und zweiten Dekoder-Sequenzen jeweils diejenige Dekoder-Sequenz ausgewählt, die der entsprechenden ursprünglichen Informations-Sequenz am ähnlichsten ist. Aus den aufeinanderfolgenden ausgewählten Dekoder-Sequenzen wird eine Ausgabe-Sequenz gebildet, welche anschließend wieder kodiert als gespeicherte Daten gespeichert wird. Die Korrelationseinrichtung umfasst beispielsweise eine Einrichtung zum Synchronisieren von Dekoder-Sequenzen, einen Datenprozessor, eine Umschalteinrichtung und/oder eine Korrekturstufe zu Korrektur fehlerhafter Dekoder-Sequenzen. Hierdurch können auf sehr einfache und kostengünstige Weise die Störungen der gespeicherten Daten korrigiert werden.

Gemäß einer weiteren vorteilhaften Ausgestaltung umfassen die gewünschten Daten Audio- und/oder Videodaten.

Insbesondere für Audio- und/oder Videodaten gibt es viele kostenlose Rundfunkquellen, so dass die Wahrscheinlichkeit erhöht ist, dass die gewünschten Daten kostenfrei verfügbar sind.

Gemäß einem weiteren Aspekt zeichnet sich die Erfindung aus durch ein Computerprogramm zum Übertragen von Daten zur Nutzung in einem Fahrzeug, wobei das Computerprogramm ausgebildet ist, das Verfahren zur Übertragung von Daten zur Nutzung in einem Fahrzeug oder eine vorteilhafte Ausgestaltung des Verfahrens auf einer Datenverarbeitungsvorrichtung durchzuführen.

Gemäß einem weiteren Aspekt zeichnet sich die Erfindung aus durch ein Computerprogrammprodukt, das ausführbaren Programmcode umfasst, wobei der Programmcode bei Ausführung durch eine Datenverarbeitungsvorrichtung das Verfahren zur Übertragung von Daten zur Nutzung in einem Fahrzeug oder eine vorteilhafte Ausgestaltung des Verfahrens ausführt.

Das Computerprogrammprodukt umfasst insbesondere ein von der Datenverarbeitungsvorrichtung lesbares Medium, auf dem der Programmcode gespeichert ist.

Ausführungsbeispiele der Erfindung sind im Folgenden anhand der schematischen Zeichnungen näher erläutert.

Es zeigen:
- Figur 1: eine Mobilfunkverbindung und eine Rundfunkverbindung,
- Figur 2: eine Vorrichtung zur Übertragung von Daten zur Nutzung in einem Fahrzeug,
- Figur 3: ein erstes Ablaufdiagramm und
- Figur 4: ein zweites Ablaufdiagramm.

Elemente gleicher Konstruktion oder Funktion sind figurenübergreifend mit den gleichen Bezugszeichen gekennzeichnet.

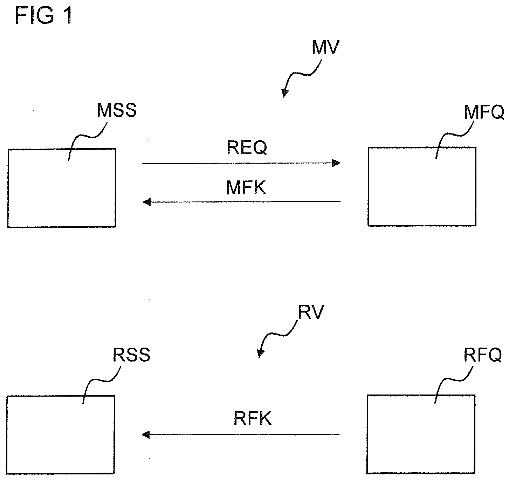

Figur 1 zeigt einen wesentlichen Unterschied zwischen einer Mobilfunkverbindung MV und einer Rundfunkverbindung RV. Die Mobilfunkverbindung MV stellt eine 1:1-Verbindung dar. Dies bedeutet, dass von einer Mobilfunkschnittstelle MSS eine Anfrage REQ an eine Mobilfunkquelle MFQ gesendet wird und daraufhin Daten von der Mobilfunkquelle MFQ über einen Mobilfunkkanal MFK an die Mobilfunkschnittstelle MSS gesendet werden. Im Gegensatz dazu stellt die Rundfunkverbindung RV eine 1:n-Verbindung dar. So werden bei der Rundfunkverbindung RV von einer Rundfunkquelle RFQ Daten über einen Rundfunkkanal RFK an viele einzelne Rundfunkschnittstellen RSS gesendet. Eine konkrete Anfrage von Daten ist nicht möglich, also insbesondere eine individuelle Anfrage und/oder Einflussnahme auf den Inhalt der Daten.

Die Mobilfunkverbindung MV wird beispielsweise mittels eines Mobilfunkstandards realisiert, wie beispielsweise eines Mobilfunkstandards des 3rd Generation Partnership Projects, wie zum Beispiel Global System for Mobile Communications (GSM), Universal Mobile Telecommunications System (UMTS), Long Term Evolution (LTE), Long Term Evolution Advanced (LTE-Advanced) und/oder einem 5G-Standard. GSM ist ein Standard für volldigitale Mobilfunknetze, der für Telefonie, aber auch für leitungsvermittelte und paketvermittelte Datenübertragung, sowie Kurzmitteilungen genutzt werden kann. Es ist der erste Standard der sogenannten zweiten Generation (2G). UMTS ist ein Mobilfunkstandard der dritten Generation (3G), mit dem deutlich höhere Datenübertragungsraten als mit dem GSM-Standard möglich sind. LTE ist ein Mobilfunkstandard der vierten Generation, der mit bis zu 300 Megabit pro Sekunde deutlich höhere Downloadraten erreichen kann als UMTS. Das Grundschema von UMTS wird bei LTE beibehalten. LTE-Advanced ist abwärtskompatibel zu LTE.

Die Rundfunkverbindung RV wird beispielsweise mittels eines Rundfunkstandards realisiert, wie beispielsweise Satellite Digital Audio Radio Services (SDARS), Digital Audio Broadcasting/Digital Multimedia Broadcasting (DAB+/DMB), Amplitudenmodulation/Frequenzmodulation (AM/FM), HD-Radio, Digital Video Broadcasting - Terrestrial (DVBT/T2), Digital Video Broadcasting - Satellite (DVB-S/S2). SDARS ist ein satellitengestütztes Radiosystem in Nordamerika. DAB, bzw. DAB+ ist ein digitaler Übertragungsstandard für terrestrischen Empfang von Digitalradio. DMB ist ein digitales Übertragungssystem, via Satellit (S-DMB) oder terrestrische Übertragung (T-DMB), wobei T-DMB auf dem Hörfunk-Standard DAB basiert, der um audiovisuelle Inhalte erweitert wurde. FM ist ein Modulationsverfahren, bei dem die Trägerfrequenz durch das zu übertragende Signal verändert wird. Die Frequenzmodulation ermöglicht gegenüber der Amplitudenmodulation einen höheren Dynamikumfang des Informationssignals. HD-Radio ist ein in den USA verwendetes proprietäres, digitales Radiosystem, das ergänzend zu DAB entwickelt wurde. DVB-T/T2 bezeichnet die terrestrische Verbreitung digitaler Fernsehsignale. DVB-S/S2 bezeichnet einen Broadcast-Standard zur Verbreitung von Audio-/Videocontent via Satellit.

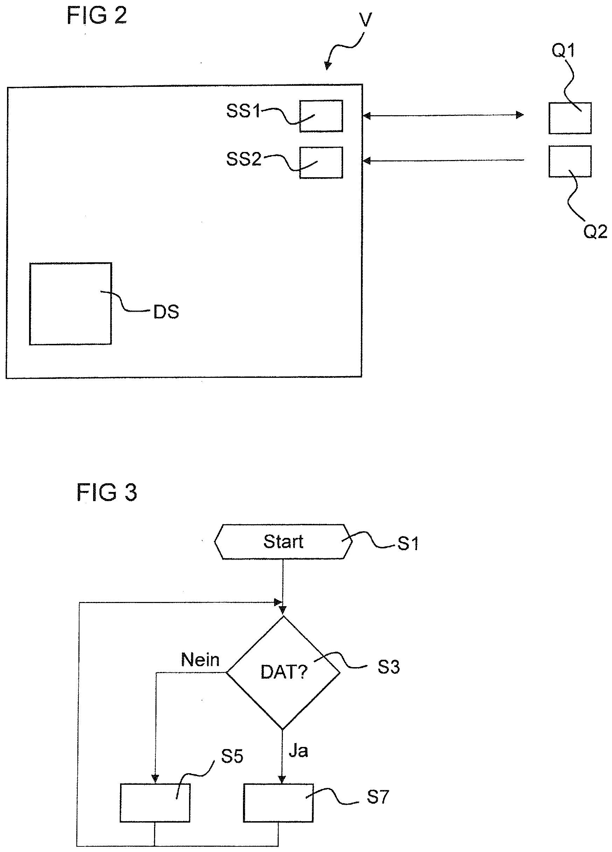

Figur 2 zeigt eine Vorrichtung V. Die Vorrichtung V weist beispielsweise eine erste Schnittstelle SS1 und eine zweite Schnittstelle SS2 auf. Die erste Schnittstelle SS1 ist beispielsweise dazu ausgebildet, über die Mobilfunkverbindung MV Daten von einer ersten Quelle Q1 anzufordern und zu empfangen. Die erste Quelle Q1 ist somit insbesondere die Mobilfunkquelle MFQ. Die zweite Schnittstelle SS2 ist beispielsweise dazu ausgebildet, Daten von einer zweiten Quelle Q2 frei von der Mobilfunkverbindung MV zu empfangen. Die zweite Quelle Q2 ist beispielsweise die Rundfunkquelle RFQ.
Die Vorrichtung V umfasst weiterhin beispielsweise eine Recheneinheit und/oder einen Daten- und Programmspeicher. Die Recheneinheit und der Daten- und Programmspeicher sind beispielsweise in einer Baueinheit und/oder verteilt auf zwei oder mehr Baueinheiten ausgebildet.

Weiterhin weist die Vorrichtung V beispielsweise einen lokalen Datenspeicher DS auf, der beispielsweise in einer getrennten Baueinheit ausgebildet sein kann. Der lokale Datenspeicher DS ist insbesondere Teil eines so genannten "Entertainment Content Servers".

Auf dem Daten- und Programmspeicher der Vorrichtung V sind insbesondere mehrere Programme abgespeichert, die während des Betriebs der Vorrichtung V abgearbeitet werden.

Figur 3 zeigt ein erstes Ablaufdiagramm eines ersten Programms, das beispielsweise in dem Daten- und Programmspeicher der Vorrichtung V gespeichert ist und von der Recheneinheit der Vorrichtung V abgearbeitet werden kann.

Das Programm wird in einem Schritt S1 gestartet, beispielsweise abhängig von einer Benutzeranforderung zur Übertragung und Wiedergabe von gewünschten Daten DAT von einer ersten Quelle Q1 mittels der Mobilfunkverbindung MV. Derartige gewünschte Daten DAT sind beispielsweise Audio- und/oder Videodaten.

In einem Schritt S3 wird ermittelt, ob die gewünschten Daten DAT auch von der zweiten Quelle Q2 frei von der Mobilfunkverbindung MV bereitgestellt werden. Hierzu wird beispielsweise eine Programminformation durchsucht, die von der Rundfunkquelle RFQ bereitgestellt wird, wie beispielsweise ein sogenannter Electronic Program Guide. Alternativ oder zusätzlich wird dies mittels der Mobilfunkverbindung MV mittels Internetdaten ermittelt, die beispielsweise eine Information darüber aufweisen, was gerade von welcher Rundfunkquelle RFQ gespielt wird. Alternativ oder zusätzlich werden mittels der Mobilfunkverbindung MV Datenbanken der jeweiligen Rundfunkquelle RFQ durchsucht. Alternativ oder zusätzlich kann mit Hilfe von einer Frequenzanalyse eines aktuell wiedergegebenen Inhalts der Rundfunkquelle RFQ nach Abgleich mit einer Datenbank der Inhalt identifiziert werden. Die Frequenzanalyse zeichnet sich beispielsweise dadurch aus, dass eine eindeutige Identifikation des jeweiligen Inhalts beispielsweise anhand von Daten- und/oder Frequenzcharakteristika erfolgt, insbesondere mittels so genanntem Fingerprinting. Die Datenbank ist beispielsweise eine Musikdatenbank. Die Musikdatenbank ist beispielsweise auf dem lokalen Datenspeicher DS gespeichert. Alternativ oder zusätzlich kann die Musikdatenbank auf einem Server außerhalb des Fahrzeugs, wie zum Beispiel einem Backend-Server gespeichert sein und die Frequenzanalyse auf dem Backend-Server durchgeführt werden.

Die zweite Quelle Q2 umfasst beispielsweise die Rundfunkquelle RFQ. Alternativ oder zusätzlich umfasst die zweite Quelle Q2 beispielsweise den lokalen Datenspeicher DS.

In einem Schritt S5 werden, falls die gewünschten Daten DAT nicht von der zweiten Quelle Q2 bereitgestellt werden, die gewünschten Daten DAT von der ersten Quelle Q1 mittels der Mobilfunkverbindung MV angefordert und empfangen zur Wiedergabe für einen Benutzer.

In einem Schritt S7 werden die gewünschten Daten DAT von der zweiten Quelle Q2 in dem Fahrzeug empfangen zur Wiedergabe für den Benutzer. Hierfür werden beispielsweise die zum Empfangen der gewünschten Daten DAT notwendigen Informationen, wie beispielsweise eine Frequenz und/oder ein Kanal und/oder eine Programm/Service-ID an den "Entertainment Content Server" übergeben, der die Rundfunkquelle RFQ ansteuert, sodass eine Wiedergabe beginnen kann.

Nach dem Schritt S5 beziehungsweise S7 wird das Programm in dem Schritt S1 wieder gestartet.

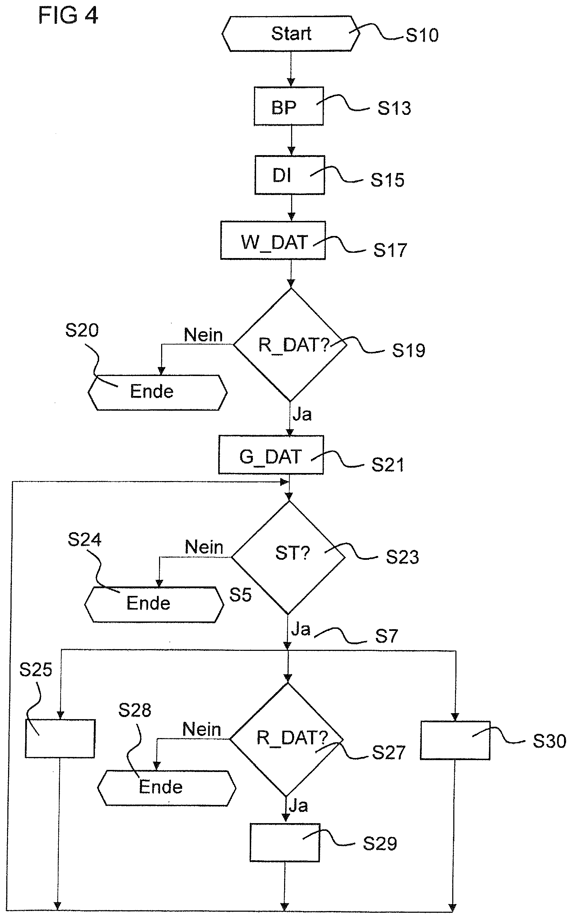

Um eine Wahrscheinlichkeit zu erhöhen, dass die gewünschten Daten DAT auf dem lokalen Datenspeicher DS liegen, falls die zweite Quelle Q2 den lokale Datenspeicher DS umfasst, ist in dem Daten- und Programmspeicher der Vorrichtung V insbesondere ein weiteres Programm gespeichert, das in dem Schritt S10 gestartet wird und das anhand des Ablaufdiagramms der Figur 4 im Folgenden erläutert wird.

In dem Schritt S13 wird ein vorgegebenes Benutzerprofil BP bereitgestellt. Das vorgegebene Benutzerprofil BP wird hierfür insbesondere ermittelt, abhängig von beispielsweise Hör- und/oder Sehgewohnheiten des Benutzers, beispielsweise welches Genre, welchen Künstler und/oder welche Art von Musik der Benutzer häufig abruft.

In dem Schritt S15 werden mittels der Mobilfunkverbindung MV Informationen DI einer Datenbank abgerufen, die repräsentativ sind für eine Beliebtheit von Daten, die von der ersten Quelle Q1 angeboten werden. Derartige Informationen DI sind beispielsweise Informationen über Topplatzierungen wie am häufigsten angefordert, am besten bewertet, am beliebtesten und ähnliche.

In einem Schritt S17 wird abhängig von dem vorgegebenen Benutzerprofil BP und/oder abhängig von den abgerufenen Informationen DI ermittelt, welche zukünftigen Daten W_DAT der Benutzer wahrscheinlich in Zukunft anfordern wird.

Die Ermittlung, welche zukünftigen Daten W_DAT der Benutzer wahrscheinlich in Zukunft anfordern wird, erfolgt insbesondere nach folgendem Mechanismus: Falls noch kein Benutzerprofil BP oder nur ein Benutzerprofil BP mit wenigen Informationen vorliegt, so werden in einer ersten Stufe die Informationen DI für die Ermittlung genutzt. Dies ist beispielsweise der Fall, falls es sich bei dem Benutzer um einen neuen Nutzer und/oder um ein neues Fahrzeug handelt. Falls der Benutzer beispielsweise eine Unterhaltungselektronikeinheit an die Vorrichtung V angeschlossen hat, beziehungsweise mit ihr verbunden hat, wird in einer zweiten Stufe eine Analyse des Inhalts der Unterhaltungselektronikeinheit durchgeführt um daraus Informationen zu einem Kundenverhalten des Benutzers zu ermitteln. Die Unterhaltungselektronikeinheit umfasst beispielsweise ein Smartphone und/oder einen externen Datenspeicher und/oder in einer so genannten Cloud hinterlegte Daten des Nutzers. In einer dritten Stufe wird das in dem Schritt S15 bereitgestellte Benutzerprofil genutzt zur Ermittlung welche zukünftigen Daten W_DAT der Benutzer wahrscheinlich in Zukunft anfordern wird.

In einem Schritt S19 wird ermittelt, ob die zukünftigen Daten W_DAT von der Rundfunkquelle RFQ als Rundfunkdaten R_DAT bereitgestellt werden. Hierzu wird beispielsweise die Programminformation durchsucht, die von der Rundfunkquelle RFQ bereitgestellt wird, wie beispielsweise der sogenannte Electronic Program Guide. Alternativ oder zusätzlich wird dies mittels der Mobilfunkverbindung MV mittels der Internetdaten ermittelt. Alternativ oder zusätzlich werden mittels der Mobilfunkverbindung MV Datenbanken der jeweiligen Rundfunkquelle RFQ durchsucht. Alternativ oder zusätzlich wird hierzu mit Hilfe von der Frequenzanalyse des aktuell wiedergegebenen Inhalts der Rundfunkquelle RFQ nach Abgleich mit der Datenbank der wiedergegebene Inhalt identifiziert.

Werden die zukünftigen Daten W_DAT von der Rundfunkquelle RFQ als Rundfunkdaten R_DAT nicht bereitgestellt, so wird das Programm in einem Schritt S20 fortgeführt, in dem es beendet wird.

Werden die zukünftigen Daten W_DAT von der Rundfunkquelle RFQ als Rundfunkdaten R_DAT bereitgestellt, so wird das Programm in einem Schritt S21 fortgeführt. In dem Schritt S21 werden die bereitgestellten Rundfunkdaten R_DAT auf dem lokalen Datenspeicher DS als gespeicherte Daten G_DAT gespeichert für eine zukünftige Wiedergabe. Hierfür werden beispielsweise die zum Empfangen der Rundfunkdaten R_DAT notwendigen Informationen, wie beispielsweise eine Frequenz und/oder ein Kanal und/oder eine Programm/Service-ID an den "Entertainment Content Server" übergeben, der die Rundfunkquelle RFQ ansteuert, sodass eine Aufnahme beginnen kann. Insbesondere wird der lokalen Datenspeicher DS als Ringspeicher verwendet, sodass ältere Aufzeichnungen überschrieben werden, wenn ein reservierter Speicherbereich voll ist.
In einem Schritt S23 werden die gespeicherten Daten G_DAT auf Störungen ST überprüft. Zur Identifikation von Störungen ST können beispielsweise Analysealgorithmen verwendet werden, die beispielsweise ein Audiosignal auf nicht mit dem Audiosignal zugehörige Signale analysieren. Hierfür kann beispielsweise mit Hilfe von der Frequenzanalyse eines in den gespeicherten Daten G_DAT kodierten Inhalts und nach Abgleich mit der Datenbank der kodierte Inhalt identifiziert werden. Die Datenbank ist beispielsweise die Musikdatenbank. In dieser Musikdatenbank sind beispielsweise Musikstücke komplett in ihrer Frequenzcharakteristik hinterlegt. Somit können Abweichungen zwischen der hinterlegten Charakteristika und aufgezeichneten Charakteristika verglichen werden und alle Abweichungen von den hinterlegten Charakteristika erkannt werden.

Weisen die gespeicherten Daten G_DAT keine Störungen ST auf, so wird das Programm in einem Schritt S24 fortgeführt und beendet.

Weisen die gespeicherten Daten G_DAT Störungen ST auf, so wird das Programm beispielsweise in einem Schritt S25 fortgeführt. Alternativ oder zusätzlich wird das Programm in einem Schritt.S27 fortgeführt. Alternativ oder zusätzlich wird das Programm in einem Schritt S30 fortgeführt.

In dem Schritt S25 wir der Inhalt, der mittels der gespeicherten Daten G_DAT gespeichert ist, an der Stelle, an der die Störungen ST sind, gedämpft insbesondere stummgeschaltet und anschließend wieder als gespeicherte Daten G_DAT gespeichert. Anschließend wird das Programm in dem Schritt S23 fortgeführt.

In dem Schritt S27 wird überprüft, ob die gespeicherten Daten G_DAT erneut von der Rundfunkquelle RFQ als Rundfunkdaten R_DAT bereitgestellt werden. Ist dies nicht der Fall, so wird das Programm beispielsweise in einem Schritt S28 fortgeführt und beendet. Ist dies der Fall, so wird das Programm in einem Schritt S29 fortgeführt.

In dem Schritt S29 werden die erneut von der Rundfunkquelle RFQ bereitgestellten Rundfunkdaten R_DAT auf dem lokalen Datenspeicher DS erneut als gespeicherte Daten G_DAT gespeichert. Anschließend wird das Programm in dem Schritt S23 fortgesetzt.

In dem Schritt S30 werden die Störungen ST behoben, indem ein gestörter Teil der gespeicherten Daten G_DAT korrigiert wird mit Daten, die hierfür mittels der Mobilfunkverbindung MV von der ersten Quelle Q1 angefordert werden und/oder mittels der Rundfunkquelle RFQ empfangen werden. Anschließend wird das Programm in dem Schritt S23 fortgesetzt.

Durch das gezeigte Vorgehen kann dazu beigetragen werden, dass eine sehr kostengünstige Übertragung der gewünschten Daten DAT realisiert wird.

### Bezugszeichenliste

- MV: Mobilfunkverbindung
- MSS: Mobilfunkschnittstelle
- REQ: Anfrage
- MFQ: Mobilfunkquelle
- MFK: Mobilfunkkanal
- RV: Rundfunkverbindung
- RSS: Rundfunkschnittstelle
- RFQ: Rundfunkquelle
- RFK: Rundfunkkanal
- V: Vorrichtung
- SS1: erste Schnittstelle
- SS2: zweite Schnittstelle
- Q1: erste Quelle
- Q2: zweite Quelle
- DS: Datenspeicher
- DAT: gewünschte Daten
- BP: Benutzerprofil
- DI: Informationen
- W_DAT: zukünftige Daten
- R_DAT: Rundfunkdaten
- G_DAT: gespeicherte Daten
- ST: Störungen

## Patentansprüche

1. Verfahren zur Übertragung von Daten zur Nutzung in einem Fahrzeug, bei dem
- abhängig von einer Benutzeranforderung zur Übertragung und Wiedergabe von gewünschten Daten (DAT) von einer ersten Quelle (Q1) mittels einer Mobilfunkverbindung (MV) ermittelt wird, ob die gewünschten Daten (DAT) auch von einer zweiten Quelle (Q2) frei von der Mobilfunkverbindung (MV) bereitgestellt werden,
- falls die gewünschten Daten (DAT) auch von der zweiten Quelle (Q2) frei von der Mobilfunkverbindung (MV) bereitgestellt werden, die gewünschten Daten (DAT) von der zweiten Quelle (Q2) in dem Fahrzeug empfangen werden zur Wiedergabe für einen Benutzer,
**dadurch gekennzeichnet, dass** die zweite Quelle (Q2) einen lokalen Datenspeicher (DS) des Fahrzeugs umfasst, und dass
- abhängig von einem vorgegebenen Benutzerprofil (BP) ermittelt wird, welche zukünftigen Daten (W_DAT) der Benutzer wahrscheinlich in Zukunft anfordern wird,
- ermittelt wird, ob die zukünftigen Daten (W_DAT) von einer Rundfunkquelle (RFQ) als Rundfunkdaten (R_DAT) bereitgestellt werden,
- die von der Rundfunkquelle (RFQ) bereitgestellten Rundfunkdaten (R_DAT) auf dem lokalen Datenspeicher (DS) als gespeicherte Daten (G_DAT) gespeichert werden für eine zukünftige Wiedergabe.

2. Verfahren nach Anspruch 1,
wobei die zweite Quelle (Q2) eine Rundfunkquelle (RFQ) und/oder einen WLAN-Accesspoint umfasst.

3. Verfahren nach Anspruch 1 oder 2,
bei dem
- mittels der Mobilfunkverbindung (MV) Informationen einer Datenbank abgerufen werden, die repräsentativ sind für eine Beliebtheit von Daten, die von der ersten Quelle (Q1) angeboten werden,
- abhängig von abgerufenen Informationen (DI) ermittelt wird, welche zukünftigen Daten (W_DAT) der Benutzer wahrscheinlich in Zukunft anfordern wird,
- ermittelt wird, ob die zukünftigen Daten (W_DAT) von einer Rundfunkquelle (RFQ) als Rundfunkdaten (R_DAT) bereitgestellt werden,
- die von der Rundfunkquelle (RFQ) bereitgestellten Rundfunkdaten (R_DAT) auf dem lokalen Datenspeicher (DS) als gespeicherte Daten (G_DAT) gespeichert werden für eine zukünftige Wiedergabe.

4. Verfahren nach einem der vorhergehenden Ansprüche, bei dem
- die gespeicherten Daten (G_DAT) auf Störungen (ST) überprüft werden,
- falls die gespeicherten Daten (G_DAT) Störungen (ST) aufweisen, die Störungen (ST) behoben werden, indem ermittelt wird, ob die gespeicherten Daten (G_DAT) von der Rundfunkquelle (RFQ) erneut als Rundfunkdaten (R_DAT) bereitgestellt werden und falls die gespeicherten Daten (G_DAT) von der Rundfunkquelle (RFQ) erneut als Rundfunkdaten (R_DAT) bereitgestellt werden, die von der Rundfunkquelle (RFQ) bereitgestellten Rundfunkdaten (R_DAT) auf dem lokalen Datenspeicher (DS) erneut als gespeicherte Daten (G_DAT) gespeichert werden.

5. Verfahren nach einem der vorhergehenden Ansprüche, bei dem die gespeicherten Daten (G_DAT) auf Störungen (ST) überprüft werden,
- falls die gespeicherten Daten (G_DAT) Störungen (ST) aufweisen, die Störungen (ST) behoben werden, indem ein gestörter Teil der gespeicherten Daten (G_DAT) korrigiert wird mit Daten, die hierfür mittels der Mobilfunkverbindung (MV) von der ersten Quelle (Q1) angefordert werden und/oder mittels der Rundfunkquelle (RFQ) empfangen werden.

6. Verfahren nach einem der vorhergehenden Ansprüche, bei dem die gewünschten Daten (DAT) Audio- und/oder Videodaten umfassen.

7. Vorrichtung (V) zur Übertragung von Daten zur Nutzung in einem Fahrzeug, wobei die Vorrichtung (V) dazu ausgebildet ist, ein Verfahren nach einem der Ansprüche 1 bis 6 auszuführen.

8. Computerprogramm zur Übertragung und Wiedergabe von Daten zur Nutzung in einem Fahrzeug, wobei das Computerprogramm ausgebildet ist, ein Verfahren nach einem der Ansprüche 1 bis 6 bei seiner Ausführung auf einer Datenverarbeitungsvorrichtung durchzuführen.

9. Computerprogrammprodukt umfassend ausführbaren Programmcode, wobei der Programmcode bei Ausführung durch eine Datenverarbeitungsvorrichtung das Verfahren nach einem der Ansprüche 1 bis 6 ausführt.

## Claims

1. A method for transmitting data for use in a vehicle, in which
- it is determined, depending on a user request for transmitting and reproducing desired data (DAT) from a firstsource (Q1) by means of a mobile connection (MV), whether the desired data (DAT) are also provided by a second source (Q2) free from the mobile connection (MV),
- if the desired data (DAT) are also provided by the second source (Q2) free from the mobile connection (MV), the desired data (DAT) are received in the vehicle from the second source (Q2) for reproduction for the user,
**characterised in that** the second source (Q2) comprises a local data memory (DS) of the vehicle, and **in that**
- depending on a predefined user profile (BP), it is determined what future data (W_DAT) the user will likely request in future,
- it is determined whether the future data (W_DAT) are provided by a broadcast radio source (RFQ) as broadcast radio data (R_DAT); and
- the broadcast radio data (R_DAT) provided by the broadcast radio source (RFQ) are stored in the local data memory (DS) as stored data (G_DAT) for future reproduction.

2. A method according to claim 1,
wherein the second source (Q2) comprises a broadcast radio source (RFQ) and/ora WLAN access point.

3. A method according to claim 1 or 2,
in which
- information representative of a popularity of data offered by the first source (Q1) from a database is retrieved using the mobile radio connection (MV);
- future data (W_DAT) likely to be requested by the user in the future is determined depending on the retrieved information (DI);
- it is determined whether the future data (W_DAT) are provided by a broadcast radio source (RFQ) as broadcast radio data (R_DAT); and
- the broadcast radio data (R_DAT) provided by the broadcast radio source (RFQ) are stored in the local data memory (DS) as stored data (G_DAT) for future reproduction.

4. A method according to any one of the preceding claims, in which
- the stored data (G_DAT) are checked for interference (ST);
- if the stored data (G_DAT) have interference (ST), the interference (ST) is removed by determining whether the stored data (G_DAT) are again provided by the broadcast radio source (RFQ) as broadcast radio data (R_DAT) and, if the stored data (G_DAT) are again provided by the broadcast radio source (RFQ) as broadcast radio data (R_DAT), the broadcast radio data (R_DAT) provided by the broadcast radio source (RFQ) are again stored in the local data memory (DS) as stored data (G_DAT).

5. A method according to any one of the preceding claims, in which the stored data (G_DAT) are checked for interference (ST),
- if the stored data (G_DAT) have interference (ST), the interference (ST) is removed by correcting a part of the stored data (G_DAT) which has interference using data which are requested from the first source (Q1) for this purpose by means of the mobile radio connection (MV) and/or are received by means of the broadcast radio source (RFQ).

6. A method according to any one of the preceding claims, in which the desired (DAT) comprise audio and/or video data.

7. A device (V) for transmitting data for use in a vehicle, wherein the device (V) is designed to carry out a method according to any one of claims 1 to 6.

8. A computer program for transmitting and reproducing data for use in a vehicle, wherein the computer program is designed to carry out a method according to any one of claims 1 to 6 when the computer program is run on a data processing device.

9. A computer program product comprising executable program code, wherein the program code, when executed by a data processing device, carries out the method according to any one of claims 1 to 6.

## Revendications

1. Procédé de transmission de données destinées à être utilisées dans un véhicule selon lequel :
- en fonction d'une demande d'un utilisateur de transmettre et de reproduire des données souhaitées (DAT) provenant d'une première source (Q1) au moyen d'une liaison de téléphonie mobile (MV), on vérifie si les données (DAT) souhaitées sont aussi librement fournies par une seconde source (Q2) en dehors de la liaison de téléphonie mobile (MV),
- si les données (DAT) souhaitées sont également fournies par la seconde source (Q2) en dehors de la liaison de téléphonie mobile (MV) les données (DAT) souhaitées provenant de la seconde source (Q2) sont reçues dans le véhicule pour permettre leur reproduction pour un utilisateur,
**caractérisé en ce que** la seconde source (Q2) comporte une mémoire de données locale (DS) du véhicule, et
- en fonction du profil d'un utilisateur (BP) prédéfini, on détermine quelles données futures (W_DAT) l'utilisateur demandera probablement dans le futur,
- on détermine si les données futures (W_DAT) seront fournies par une source de radio diffusion (RFQ) en tant que données radio (R_DAT),
- les données radio (R_DAT) fournies par la source de radio diffusion (RFQ) sont enregistrées dans la mémoire de données locale (DS) en tant que données enregistrées (G_DAT) pour permettre leur reproduction future.

2. Procédé conforme à la revendication 1,
selon lequel la seconde source (Q2) est une source de radio diffusion (RFQ) et/ou un point d'accès WLAN.

3. Procédé conforme à la revendications 1 ou 2,
selon lequel :
- au moyen de la liaison de téléphonie mobile (MV) on extrait d'une banque de données des informations qui sont représentatives d'une notoriété de données qui sont offertes par la première source (Q1),
- en fonction des informations (DI) extraites on détermine quelles données futures (W_DAT) l'utilisateur demandera probablement dans le futur,
- on détermine si les données futures (W_DAT) seront fournies par une source de radio diffusion (RFQ) sous la forme de données radio (R_DAT),
- les données radio (R_DAT) fournies par la source de radio diffusion (RFQ) sont enregistrées dans la mémoire de données locale (DS) en tant que données enregistrées (G_DAT) pour permettre leur reproduction futur.

4. Procédé conforme à l'une des revendications précédentes,
selon lequel :
- les perturbations (ST) des données (G_DAT) enregistrées sont contrôlées,
- si les données enregistrées (G_DAT) comportent des perturbations (ST) on remédie à ces perturbations (ST) du fait qu'il est déterminé si les données enregistrées (G_DAT) sont à nouveau fournies par la source de radio diffusion (RFQ) entend que données radio (R_DAT), et si les données enregistrées (G_DAT) sont à nouveaux fournies par la source de radio diffusion (RFQ) en tant que données radio (R_DAT), les données radio (R_DAT) fournies par la source de radio diffusion (RFQ) sont à nouveau enregistrées dans la mémoire de données locale (DS) en tant que données enregistrées (G_DAT).

5. Procédé conforme à l'une des revendications précédentes,
selon lequel les perturbations (ST) des données enregistrées (G_DAT) sont contrôlées,
- si les données enregistrées (G_DAT) comportent des perturbations (ST) on remédie à ces perturbations (ST) du fait que la partie perturbée des données enregistrées (G_DAT) est corrigée avec des données qui sont, à cet effet, demandées au moyen de la liaison de téléphonie mobile (MV) à partir de la première source (Q1) et/ou sont reçues au moyen de la source de radio diffusion (RFQ).

6. Procédé conforme à l'une des revendications précédentes,
selon lequel les données (DAT) souhaitées comportent des données audio et/ou des données vidéo.

7. Dispositif (V) de transmission de données destiné à être utilisé dans un véhicule, ce dispositif (V) étant réalisé pour permettre la mise en oeuvre d'un procédé conforme aux revendications 1 à 6.

8. Programme d'ordinateur permettant de transmettre et de reproduire des données destinées à être utilisées dans un véhicule, ce programme d'ordinateur étant réalisé pour permettre la mise en oeuvre d'un procédé conforme à l'une des revendications 1 à 6, lors de son exécution sur un dispositif de traitement de données.

9. Produit programme d'ordinateur comprenant un code de programme pouvant être exécuté, lors de son exécution par un dispositif de traitement de données ce code de programme mettant en oeuvre le procédé conforme à l'une des revendications 1 à 6.
